# EUROPEAN PATENT SPECIFICATION

(11) **EP 3 037 936 B1**
(45) Date of publication and mention of the grant of the patent: **26.06.2019**
(21) Application number: 15200374.5
(22) Date of filing: 16.12.2015
(51) Int. Cl.: G06F 3/042, H04N 9/31, G06F 3/033, G06F 3/03, G06F 3/0354

(54) **IMAGE PROJECTION APPARATUS, AND SYSTEM EMPLOYING INTERACTIVE INPUT-OUTPUT CAPABILITY**
BILDPROJEKTIONSVORRICHTUNG UND -SYSTEM MIT INTERAKTIVER EINGABE-AUSGABE-FÄHIGKEIT
APPAREIL DE PROJECTION D'IMAGE ET SYSTÈME UTILISANT UNE CAPACITÉ D'ENTRÉE-SORTIE INTERACTIVE

(30) Priority: 25.12.2014 JP 2014262331
(43) Date of publication of application: 29.06.2016
(73) Proprietor: Ricoh Company, Ltd., Tokyo 143-8555 (JP)
(72) Inventor: NAGAO, Masafumi, Tokyo, 143-8555 (JP)
(74) Representative: SSM Sandmair

(56) References cited:
- US-A1- 2005 099 405
- US-A1- 2011 169 746
- US-A1- 2013 070 232
- RUSSELL KRUGER ET AL: "Roles of Orientation in Tabletop Collaboration: Comprehension, Coordination and Communication", COMPUTER SUPPORTED COOPERATIVE WORK (CSCW), KLUWER ACADEMIC PUBLISHERS, DO, vol. 13, no. 5-6, 1 December 2004 (2004-12-01), pages 501-537, XP019236198, ISSN: 1573-7551, DOI: 10.1007/S10606-004-5062-8

## Description

### BACKGROUND

### Technical Field

The present invention relates to an image projection apparatus, and a system employing interactive input-output capability.

### Background Art

Conventional interactive input-output systems can be configured with an image projection apparatus such as a projector, a coordinate input device such as an electronic pen or finger, and an information processing apparatus such as a computer used as an external apparatus. In the interactive input-output systems, a user can draw images (e.g., line, character, text, figure) on a projection screen used for projecting images from the image projection apparatus by using the coordinate input device, and can operate the external apparatus such as the information processing apparatus that transmits image signals by using the coordinate input device on the projection screen.

For example, JP- 2004-062657-A describes an image projection apparatus such as a rear projection apparatus employing the following interactive input-output capability, in which the image projection apparatus is coupled or connected to an external apparatus. Specifically, a user moves a coordinate input device on or over a projection screen while viewing the projection screen, and information coordinates of points pointed by the moved coordinate input device are input on the projection screen as a trajectory to operate the connected external apparatus, or images (e.g., line, character, text, figure) can be drawn on the projection screen by using the external apparatus.

When the image projection apparatus projects images on the projection screen such as a top face of a desk and table, a plurality of users existing at different sides of the top face operates the coordinate input device to draw images (e.g., line, character, text, figure) while viewing the projection screen. However, this configuration may have some inconveniences. For example, when the plurality of users is drawing images on the projection screen from different directions by turns or in turn, an orientation of an image drawn by one user and an orientation of an image drawn by another user may have different angles, and thereby the users may feel difficulty of drawing a new image with the same orientation of already input image on the projection screen.

US 2011/169746 A1 discloses a projector which is adapted to project an image onto a desk or a table, and wherein the orientation of a menu in the projected image is rotated in the direction of an insertion direction of a hand of the user.

### SUMMARY

The invention is defined by the appended claims.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of an image projection system employing an image projection apparatus according to one or more example embodiments of the present invention;
FIG. 2 is a schematic configuration of a conventional image projection system when a plurality of users uses a projection image projected on a platform;
FIG. 3 is another schematic configuration of a configuration image projection apparatus;
FIG. 4 is an example of a hardware configuration of an image projection apparatus according to one or more example embodiments of the present invention;
FIG. 5 is an example of a functional block diagram of the image projection system;
FIG. 6 is an example of an operational sequence of interactive operation capability performable in the image projection system;
FIG. 7 is a flow chart showing the steps of a process of rotating a projection screen according to a first example embodiment;
FIG. 8 is a schematic view of detecting a direction where a user to input an image exists;
FIG. 9 is an example of a coordinate area table used for identifying a user direction;
FIG. 10A illustrates a timing when a user starts to write an image by using a pointing device,
FIG. 10B illustrates a timing when the user is writing the image by using the pointing device, and
FIG. 10C illustrates a timing when the user completes the writing operation by using the pointing device;
FIG. 11 is a flow chart showing the steps of a process of rotating the projection screen according to a second example embodiment;
FIGs. 12(a), 12(b) and 12(c) illustrate two cases when the projection screen is rotated about the rotation center according to a third example embodiment;
FIG. 13 is a flow chart showing the steps of a process of rotating the projection screen according to a fourth example embodiment; and
FIGs. 14A and 14B illustrate a rotation of the projection screen when two users use a pointing device according to the fourth example embodiment.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views illustrated in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, one or more apparatuses or systems according to one or more example embodiments are described hereinafter,

A description is given of an image projection system or image display system according to one or more example embodiments of the present invention with reference to drawings. The image projection system can be configured with an image projection apparatus such as a projector (hereinafter, image projection apparatus 100) having an interactive input-output capability, interactive input capability or interactive operational capability, and other apparatus having an interactive input-output capability, interactive input capability or interactive operational capability. An interactive input-output system, interactive input system or interactive operational system having the interactive input-output capability, interactive input capability or interactive operational capability can be applied to the image projection system or image display system according to one or more example embodiments of the present invention.

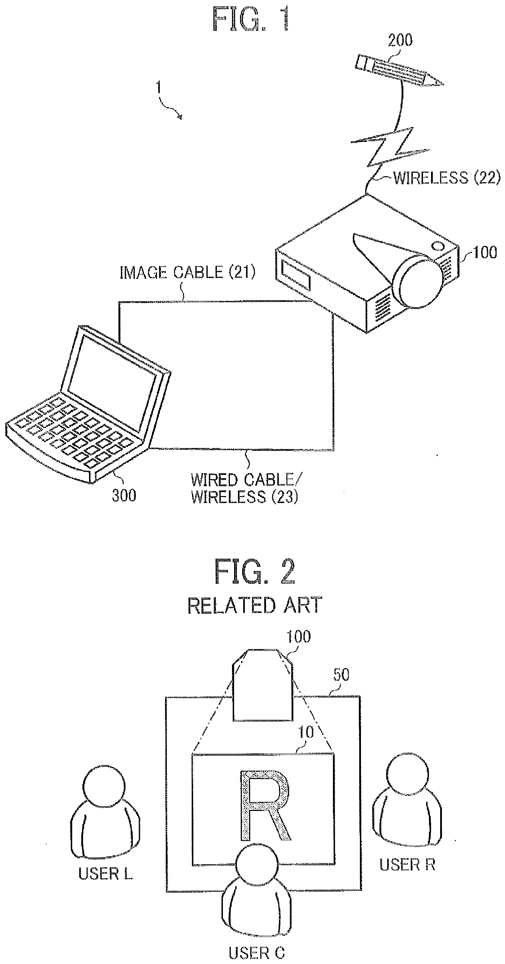

A description is given of a configuration and operation of an image projection system according to one or more example embodiments of the present invention with reference to drawings. FIG. 1 is a schematic configuration of an image projection system 1 employing an image projection apparatus 100 according to one or more example embodiments of the present invention. FIG. 2 is a schematic configuration of the image projection system 1 when a plurality of users uses a projection image projected on a platform (e.g., table, desk, stand) having a face that can be used as a projection screen or face. FIG. 2 describes a basic configuration of conventional image projection systems and the image projection system according to one or more example embodiments of the present invention.

As illustrated in FIG. 1, the image projection system 1 can be configured with, for example, the image projection apparatus 100 such as a projector, an information processing apparatus 300 used as an external apparatus that can input image information to be projected by the image projection apparatus 100, and a pointing device 200 such as an electronic pen used as a coordinate input device. The pointing device 200 can be configured to transmit information electronically. As illustrated in FIG. 1, the pointing device 200 and the image projection apparatus 100 can be coupled by wireless 22, and the information processing apparatus 300 and the image projection apparatus 100 can be coupled or connected by an image cable 21 (e.g., HDMI cable), and a USB wired cable/wireless 23. When information displayed on a monitor of the information processing apparatus 300 is transmitted to the image projection apparatus 100 via the image cable 21, the mage projection apparatus 100 performs image processing as required, and then projects an image of a cursor with the information transmitted from the information processing apparatus 300.

As illustrated in FIG. 2, a meeting can be held by a plurality of users L, R, and C existing around a platform 50 (e.g., table, desk, stand) having a face that can be used as a projection screen or face projectable by the image projection apparatus 100, in which the plurality of users L, R, and C can hold the meeting while writing or drawing images (e.g., line, character, text, figure) on the projection screen 10 projected on the platform 50 by using the pointing device 200. By using the image projection apparatus 100 and the pointing device 200 having the interactive operation capability, the plurality of users can comprehend topics in detail and the meeting can be performed efficiently. Further, by using portable image projection apparatuses having a small-sized configuration, projection images can be projected on the platform (e.g., table, desk, stand) disposed in any rooms without using special devices, with which mobility/maneuverability and cost performance can be enhanced.

However, as to conventional image projection apparatuses having the interactive input-output capability, when a projection image is projected on a projection screen such as a top face of a platform (e.g., table, desk, stand), and a plurality of users inputs or writes images (e.g., line, character, text, figure) on the projection screen from different directions by using a coordinate input device, the following inconveniences may occur. For example, when the plurality of users is drawing images (e.g., line, character, text, figure) by inputting coordinates of points on the projection screen from different direction by turns or in turn, an orientation of an image drawn by one user and an orientation of an image drawn by another user may have different angles, and thereby the users may feel difficulty of drawing a new image with the same orientation of the already input image on the projection screen. This inconveniences can be solved by disposing a switch that can rotate the projection screen for each of the plurality of users surrounding the platform, in which the projection screen can be rotated by operating the switch when drawing images, but operability and/or usability of the image projection apparatus by the plurality of users may deteriorate.

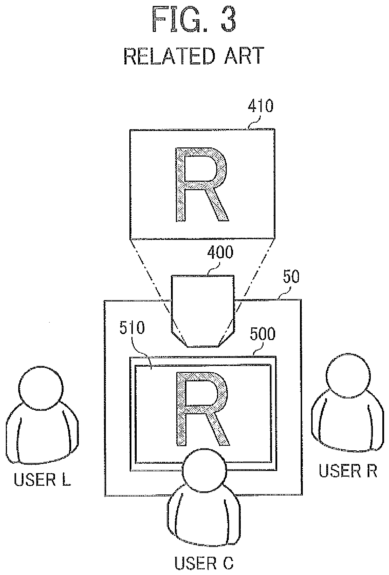

Further, another technology using a pen-tablet system having the interactive input-output capability can be devised for image projection apparatuses to input handwriting information on a projected or displayed image as disclosed in JP-2011-113128-A. FIG. 3 is a schematic configuration of operation of the image projection apparatus using a pen-tablet system of related art disclosed in JP-2011-113128-A. As illustrated in FIG. 3, a tablet 500 (pen-tablet input device) having a display face 510 (sub-screen) is disposed on a platform (e.g., table, desk, stand) surrounded by a plurality of users (input person), and an image projection apparatus 400 is used to project an image on a projection screen 410 (main screen), in which coordinates of points on the display face 510 and coordinates of points on the projection screen 410 are correlated. When a user uses a pen to write an image on the display face 510, a point on the display face 510 contacted by the pen and a shadow of a hand using the pen are detected. Then, the contact point of the pen is connected with one point in the shadow farthest from the contact point of the pen to determine a direction of the user that is writing the image, and then a screen displaying information on the display face 510 is rotated. However, the image projection apparatus 400 has no function to rotate the projected image, and further, the tablet 500 having the display face 510 is required in addition to the image projection apparatus 400, and thereby mobility/maneuverability and cost performance may deteriorate.

In view of the above mentioned issues, the inventor of the present invention has devised an image projection apparatus having the interactive operation capability that can be used to input or write an image on a projection screen projected on a platform (e.g., table, desk, stand) by a plurality of users by turns or in turn. As to the image projection apparatus, the plurality of users can easily write images on the projection screen projected on the platform from different directions of the projection screen by using the coordinate input device such as the pointing device 200 by turns or in turn, and the images can be drawn with an orientation easily viewable by the plurality of users. Specifically, when the plurality of users exists at the front, left and right sides of the image projection apparatus 100, the projection screen 10 can be rotated to a direction where a user that is to write information exists at a timing when the user writes the information on the projection screen 10 by using the pointing device 200. For example, when a user that is to write information exists at the right side of the image projection apparatus 100, the projection screen 10 is rotated to the right side from the front side (i.e., original, initial or reference position), and when the user at the right side finishes the writing, the projection screen 10 is rotated to the front side from the right side.

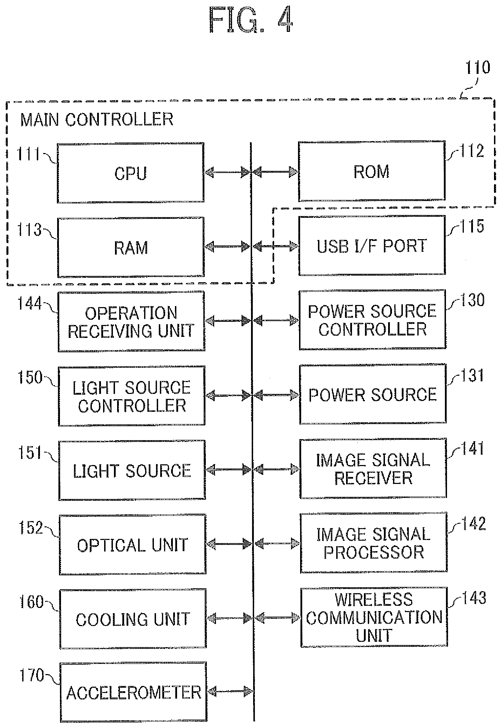

A description is given of an example of a hardware configuration of the image projection apparatus 100 with reference to FIG. 4. As illustrated in FIG. 4, the image projection apparatus 100 includes, for example, a main controller 110. The main controller 110 includes, for example, a central processing unit (CPU) 111 used as a central processor or circuitry, a read only memory (ROM) 112 used as a non-volatile memory, and a random access memory (RAM) 113 used as a volatile memory. The CPU 111 executes programs to control operations of the image projection apparatus 100. The ROM 112 stores the programs to be executed by the CPU 111 and data required for executing programs. The RAM 113 is used as a working area of the CPU 111.

The image projection apparatus 100 further includes, for example, a universal serial bus (USB) interface (I/F) port 115, a power source controller 130, a power source 131, an image signal receiver 141, an image signal processor 142, a wireless communication unit 143, an operation receiving unit 144, a light source controller 150, a light source 151, an optical unit 152, a cooling unit 160, and an accelerometer 170, which can be coupled or connected to the main controller 110. The USB I/F port 115 is used as a connector of a USB cable connected to the external apparatus 300. The power source controller 130 controls the power source 131. The power source 131 is used to supply power to each of the units in the image projection apparatus 100. The image signal receiver 141 has a plurality of image signal ports used for each type of images (e.g. D-Sub, HDMI, video). The image signal processor 142 receives image signals from the plurality of image signal ports, and processes the image signals. The wireless communication unit 143 receives measured information from the pointing device 200, or communicates (transmits and receives) information related to the interactive input-output capability (hereinafter, interactive communication information, or interactive communication capability information) with the information processing apparatus 300.

The operation receiving unit 144 has, for example, operation keys, to receive an operation by a plurality of users or operators. The light source controller 150 controls the light source 151. The light source 151 is used as a light source to emit light for projecting an image. The optical unit 152 generates an image, and projects the enlarged image. The optical unit 152 includes a projection lens. In the digital light processing (DLP: registered trademark) projector, the optical unit 152 includes a digital mirror device (DMD) and a color wheel. The cooling unit 160 such as a fan cools parts disposed inside the image projection apparatus 100. The accelerometer 170 detects acceleration of the image projection apparatus 100 to detect an installation angle of the image projection apparatus 100.

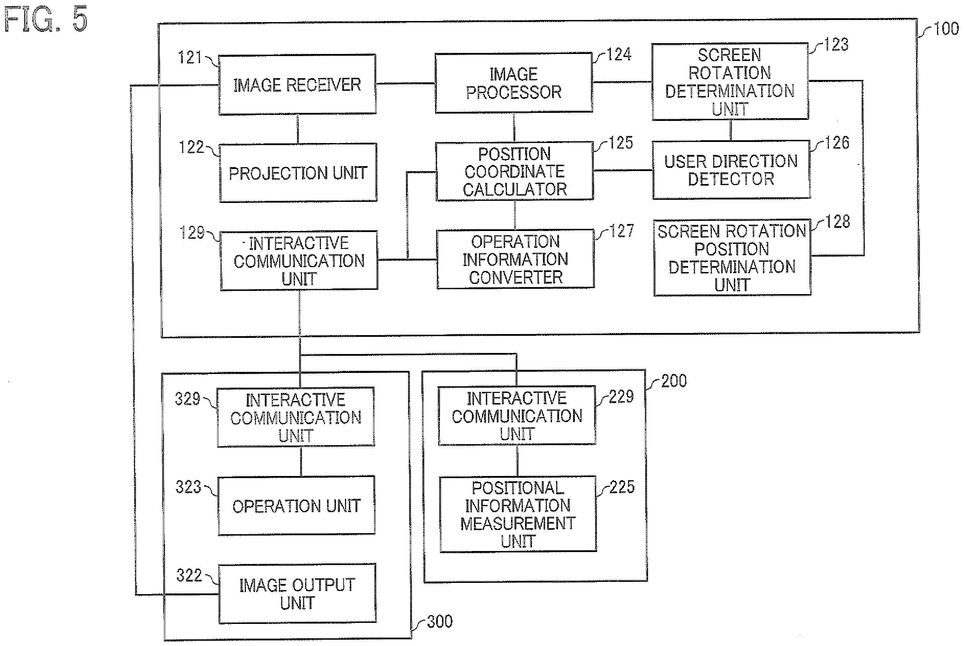

A description is given of functional units of the image projection apparatus 100, the information processing apparatus 300, and the pointing device 200 employed for the image projection system 1 with reference to drawings. FIG. 5 is an example of a functional block diagram of the image projection system 1.

### (Image projection apparatus)

As illustrated in FIG. 5, the image projection apparatus 100 includes, for example, an image receiver 121, an image processor 124, a projection unit 122, a position coordinate calculator 125, an interactive communication unit 129, an operation information converter 127, a user direction detector 126, a screen rotation determination unit 123, and a screen rotation point determination unit 128. The image receiver 121 receives an image signal input via the image cable 21 of HDMI and VGA, and a network. The image processor 124 processes the image signal received via the image receiver 121. For example, the image processor 124 performs editing of the image signal such as size change and rotation of an image to be projected, and performs processing to synthesize a pattern information in the image signal to convert the image signal to a projection signal, in which the image signal synthesized with the pattern information is to be used for measuring coordinates of a point pointed by the pointing device 200 on the projection screen 10 to be described later. The projection unit 122 projects an image based on the projection signal generated by the image processor 124 to an outside of the image projection apparatus 100 such as the projection screen 10. The position coordinate calculator 125 calculates coordinates of a point pointed by a device end of the pointing device 200 on the projection screen 10 based on information measured by the pointing device 200 and received from the pointing device 200. Specifically, the position coordinate calculator 125 calculates coordinates of the point on the projection screen 10 pointed by the optical axis of a lens of the pointing device 200.

The interactive communication unit 129 performs communication (i.e., transmission/reception) of information related to the interactive operation capability with the pointing device 200 and the information processing apparatus 300. The operation information converter 127 converts the coordinates of the point pointed by the pointing device 200 on the projection screen 10 calculated by the position coordinate calculator 125, and a button status information of the pointing device 200 to an operation information used for operating the information processing apparatus 300. Then, the operation information converter 127 transmits the operation information to the information processing apparatus 300 via the interactive communication unit 129.

The user direction detector 126 detects a direction where a user that is inputting coordinates of points exists based on information of coordinates of the point on the projection screen 10 pointed or identified by the pointing device 200. The screen rotation determination unit 123 determines whether a user is performing an operation of inputting an image (e.g., line, character, text, figure), and whether the projection screen 10 is to be rotated by using the image processor 124 based on the user direction detected by the user direction detector 126. The screen rotation point determination unit 128 determines that coordinates of a point on the projection screen 10 input by the pointing device 200 is to be used as the center for rotating the projection screen 10 when to rotate the projection screen 10.

### (Pointing device)

As illustrated in FIG. 5, the pointing device 200 includes, for example, an interactive communication unit 229, and a positional information measurement unit 225. The interactive communication unit 229 performs communication (i.e., transmission/reception) of information related to the interactive operation capability with the image projection apparatus 100. The positional information measurement unit 225 measures a pattern information embedded in an image projected on the projection screen 10 and pointed by the pointing device 200, and transmits the measured pattern information to the image projection apparatus 100 via the interactive communication unit 229.

### (Information processing apparatus)

As illustrated in FIG. 5, the information processing apparatus 300 includes, for example, an interactive communication unit 329, an operation unit 323, and an image output unit 322. The interactive communication unit 329 performs communication (i.e., transmission/reception) of information related to the interactive operation capability with the image projection apparatus 100. The operation unit 323 is used to operate the information processing apparatus 300 based on an operation to keys disposed for the information processing apparatus 300, and the operation information received from the image projection apparatus 100. The image output unit 322 outputs image data from the information processing apparatus 300 to an external display apparatus such as the image projection apparatus 100 and an external monitor.

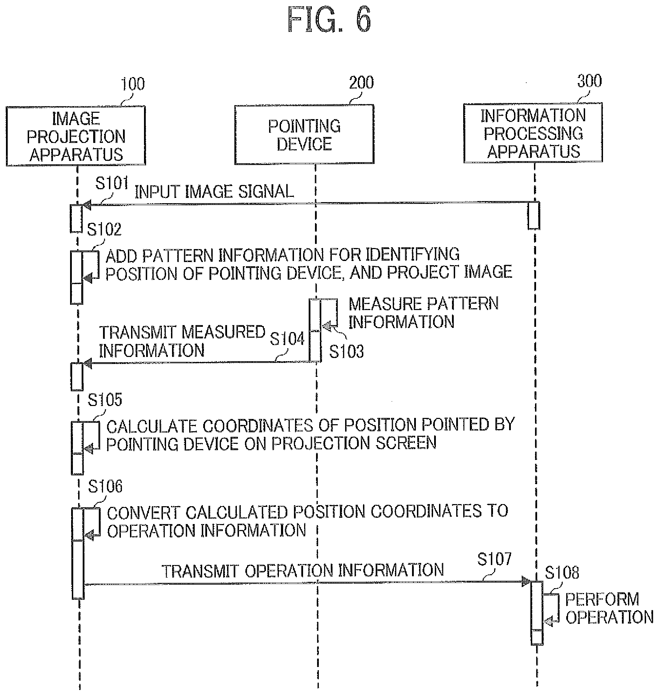

The above described image projection apparatus 100, the pointing device 200, and the information processing apparatus 300 can devise the interactive operation capability, interactive input capability or interactive input-output capability as illustrated in an operational sequence of FIG. 6. FIG. 6 is an example of an operational sequence of the interactive operation capability performable in the image projection system 1.

When the information processing apparatus 300 is coupled or connected to the image projection apparatus 100 via the image cable 21(e.g., HDMI) as illustrated in FIG. 1, the information processing apparatus 300 can input an image signal to the image projection apparatus 100 (S101). When the image projection apparatus 100 receives the image signal from the information processing apparatus 300 coupled or connected by the image cable 21 such as a HDMI cable, the image projection apparatus 100 adds a pattern information for identifying a position of the pointing device 200 to the image signal, and projects the image embedded with the pattern information (S102). The pointing device 200 measures coordinates of a point pointed by the pointing device 200 on the projection screen 10 operated by a user or operator (S103), and transmits the measured information and the operation information of the operation button to the image projection apparatus 100 (S104).

Based on the measured information received from the pointing device 200, the image projection apparatus 100 calculates coordinates of the point currently pointed by the pointing device 200, operated by the user, on the projection screen 10 (S105). Then, the image projection apparatus 100 converts the calculated coordinates of the point, and the operation information of the operation button of the pointing device 200 to the operation information of the information processing apparatus 300 (S106), and transmits the operation information to the information processing apparatus 300 (S107). Then, the information processing apparatus 300 performs an operation based on the operation information received by the information processing apparatus 300 such as a personal computer (S108). Specifically, the operation information received by the information processing apparatus 300 is reproduced in view of conditions at the information processing apparatus 300 as various operations such as movement, click and touch of a mouse cursor. If the drawing capability of the information processing apparatus 300 is activated, images (e.g., line, character, text, and figure) can be drawn.

A description is given of a plurality of example embodiments of the image projection system 1.

### (First example embodiment)

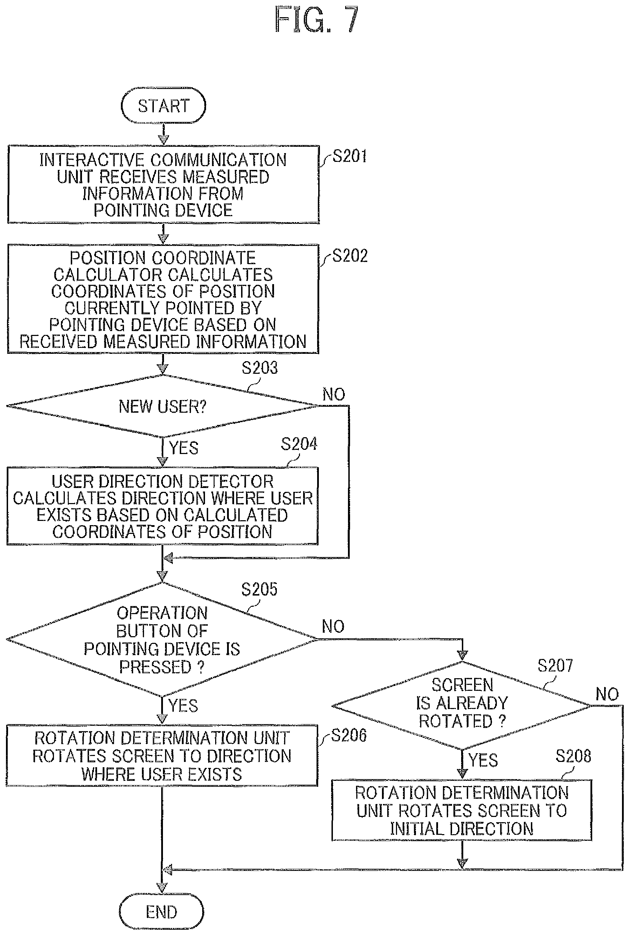

A description is given of the image projection apparatus 100 that can rotate the projection screen 10 as a first example embodiment with reference to drawing. A description is given of a process of rotating the projection screen 10 with reference to FIG. 7. FIG. 7 is a flow chart showing the steps of a process of rotating the projection screen 10 of the first example embodiment.

When the interactive communication unit 129 receives the measured information from the pointing device 200 (S201), the position coordinate calculator 125 calculates coordinates of a point or position on the projection screen 10 currently pointed by the electronic pointing device 200 based on the received measured information (S202).

Then, the screen rotation determination unit 123 determines whether a new user is operating the pointing device 200 (S203), in which the screen rotation determination unit 123 determines whether the new user exists at a direction not detected yet. Specifically, when coordinates of a point pointed by the pointing device 200 is detected for the first time after activating the interactive operation capability, and when coordinates of a point pointed by the pointing device 200 is detected when a given time period elapses after the previous inputting operation by the pointing device 200 is ended, the screen rotation determination unit 123 determines that the new user is to start to operate the pointing device 200.

When the screen rotation determination unit 123 determines that the detected user is the new user (S203: YES), the user direction detector 126 calculates the user direction where the new user exists. By contrast, when the screen rotation determination unit 123 determines that the detected user is not the new user (S203: NO), the sequence proceeds without calculating the user direction.

Then, the screen rotation determination unit 123 determines whether an operation button of the pointing device 200 is pressed (S205). When the operation button of the pointing device 200 is pressed (S205: YES), the screen rotation determination unit 123 determines that the user is to draw an image (e.g., line, character, text, figure) using the pointing device 200, and determines to rotate the projection screen 10 to the user direction where the user is to draw the image exists (i.e., user direction), in which the image processor 124 can be used as an image rotator. The image processor 124 edits the image signal to a signal for rotating the projection screen 10, and converts the image signal to a projection signal for rotating a projection direction of the projection screen 10, and then the projection screen 10 is rotated to the user direction (S206).

By contrast, if the operation button of the electronic pointing device 200 is not pressed (S205: NO), it is determined whether the projection screen 10 is already rotated (S207). Then, if the projection screen 10 is already rotated (S207: YES), it is determined that the user has completed the writing operation, and the image processor 124 ends the processing to the image signal for rotating the projection screen 10, and returns back the projection screen 10 to the initial direction (S208). As above described, the screen rotation determination unit 123 determines whether a user is performing an operation of inputting coordinates of a point, and determines whether the projection screen 10 is rotated by the image processor 124 based on a direction where the user exists (i.e., user direction) detected by the user direction detector 126.

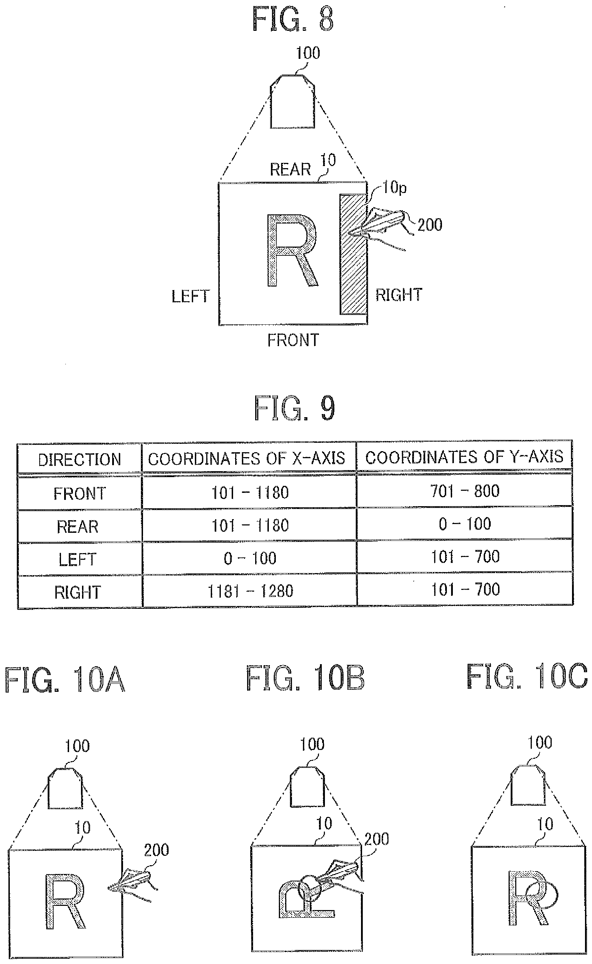

A description is given of a method of detecting a direction where a user exists (i.e., user direction) by using the user direction detector 126 with reference to FIG. 8. FIG. 8 is a schematic view of detecting a direction where a user exists, in which it is assumed that the user is to input an image. As illustrated in FIG. 8, when the user at the right side of the projection screen 10 starts to write an image on the projection screen 10 by using the pointing device 200, the user places the pointing device 200 on or over the projection screen 10 by crossing a peripheral area 10p indicated by a lined-area in FIG. 8. Therefore, when a new user is detected, the user direction can be identified or determined by detecting the peripheral area 10p of the projection screen 10 such as the peripheral area at the left, right, front and rear of the projection screen 10 that can be crossed by the coordinates of points pointed by the pointing device 200 and input by the pointing device 200.

A description is given of how to identify a user direction based on coordinates of a point input by the pointing device 200 and coordinates defining an area of the projection screen 10 with reference to FIG. 9. FIG. 9 is an example of a coordinate area table used for identifying the user direction. As illustrated in FIG. 9, the coordinate area table used for identifying the user direction can be configured with user directions and X-Y coordinates, in which a specific user direction is linked to a specific area defined by specific X-Y coordinates. By detecting the specific area defined by the specific X-Y coordinates that is crossed by the coordinates of a point input by the pointing device 200 when a user starts the writing (i.e., inputting coordinates of a point), the user direction detector 126 can detect the user direction.

A description is given of an operation of the pointing device 200 when the projection screen 10 is rotated with reference to FIG. 10. FIG. 10 illustrates an operation of the pointing device 200 when the projection screen 10 is rotated. FIG. 10A illustrates a timing when a user starts to write an image by using the pointing device 200, FIG. 10B illustrates a timing when the user is writing the image by using the pointing device 200, and FIG. 10C illustrates a timing when the user completes the writing by using the pointing device 200. For example, when a user at the right side starts to write an image by using the pointing device 200 as illustrated in FIG. 10A, the image processor 124 processes an image signal to generate a signal to rotate the projection screen 10 for ninety (90) degrees in the counter-clockwise direction as illustrated in FIG. 10B, with which the projection screen 10 can be rotated. By rotating the projection screen 10 for ninety (90) degrees in the counter-clockwise direction, the projection screen 10 is directed to a front of the user at the right side, with which the user at the right side can write the image easily. When the user at the right side completes the writing operation, the projection screen 10 is returned to the original or initial direction such as the front side as illustrated in FIG. 10C, with which the plurality of users can view the image easily.

The above described image projection apparatus 100 includes the user direction detector 126 that can detect a direction where a user that is to input an image exists (i.e., user direction) based on coordinates of a point on the projection screen 10 pointed and input by the pointing device 200. Further, the above described image projection apparatus 100 includes the screen rotation determination unit 123 that can determine whether the user is performing an operation of inputting coordinates of a point by using the pointing device 200, and can determine whether the projection screen 10 is rotated by the image processor 124 based on a direction where a user exists (i.e., user direction) detected by the user direction detector 126. With employing this configuration for the image projection apparatus 100, the following effect can be achieved.

When a user starts an operation of inputting an image on the projection screen 10 projected on a top face of the platform 50, the user moves the pointing device 200 from a position close to a body of the user toward a peripheral area on the projection screen 10. Therefore, the pointing device 200 crosses any one of the peripheral areas of the projection screen 10. When the pointing device 200 crosses a specific peripheral area, coordinates of a point input by the pointing device 200 exists in the specific peripheral area of the projection screen 10 where the user exists. Therefore, by detecting specific coordinates in the specific peripheral area of the projection screen 10 corresponding to the coordinates of the point input by the pointing device 200 when the user starts the operation of inputting the image by using the pointing device 200, the user direction detector 126 can detect the direction of the user that performs the image inputting operation.

When the screen rotation determination unit 123 determines that the user is performing the image inputting operation, and determines to rotate the projection screen 10 based on the detected user direction, the projection screen 10 can be rotated to a front direction of the user performing the image inputting operation, and projected by the projection unit 122. With this rotation processing, the user can easily perform the image inputting operation. Further, when the image inputting operation is completed and the user is not performing the image inputting operation, the screen rotation determination unit 123 determines that a rotation of the projection screen 10 based on the detected user direction is not required, and then the projection screen 10 can be returned to the original position (original point of rotation), which is easy to see from the plurality of users. Therefore, when the plurality of users writes images on the projection screen 10 projected on the platform 50 by turns or in turn from different directions by using the pointing device 200, the image projection apparatus 100 can project the image in a direction that is easy to write and easy to see by the plurality of users.

As to the image projection apparatus 100 of the first example embodiment, when the projection screen 10 is to be rotated, the image processor 124 performs size-change processing to an image signal and converts the image signal to a projection signal so that the entire of rotated projection screen 10 can be projected or displayed within a projection area on the platform (e.g., table, desk, stand).

### (Second example embodiment)

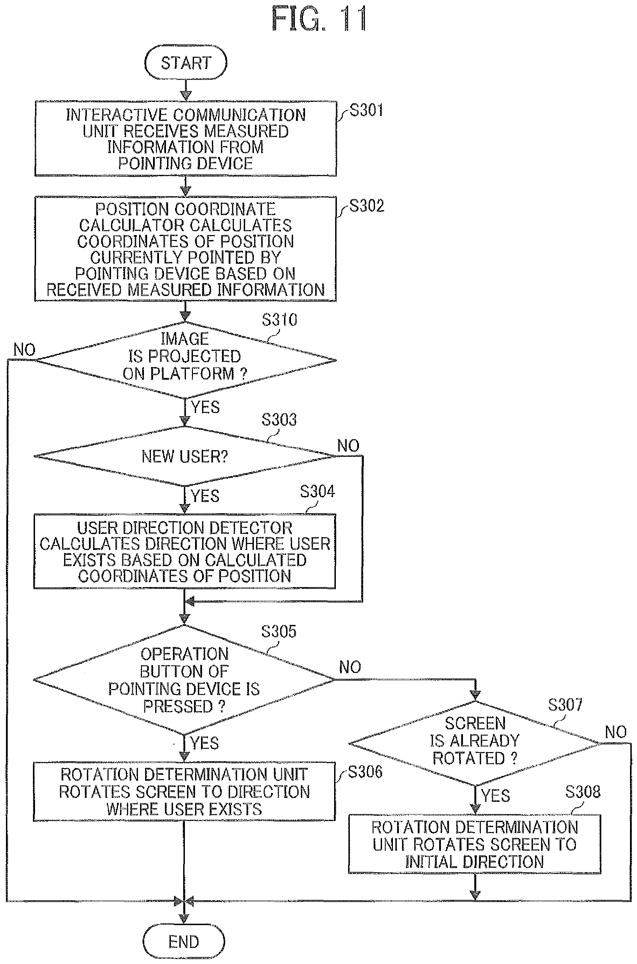

A description is given of the image projection apparatus 100 that can rotate the projection screen 10 as a second example embodiment with reference to drawing. A description is given of a process of rotating the projection screen 10 with reference to FIG. 11. Different from the first example embodiment, the second example embodiment adds a step of determining whether the image projection apparatus 100 projects an image on a face of platform such as a desk (i.e., platform face projection such as desk face projection) before step S203 of "new user ?" in the first example embodiment shown in FIG. 7. Therefore, the second example embodiment is described by omitting the same or similar configurations and associated effects described in the first example embodiment. FIG. 11 is a flow chart showing the steps of a process of rotating the projection screen 10 of the second example embodiment.

As illustrated in FIG. 11, step S310 of determining whether the image projection apparatus 100 projects an image on a platform such as a desk (i.e., platform face projection such as desk face projection) is added right before step S303 of determining whether a new user is detected without detecting a user direction. Steps S301 to S308 of FIG. 11 are matched to steps S201 to S208 of FIG. 7. If the platform face projection (e.g., desk face projection) is not performed by the image projection apparatus 100 (S310: NO), it can determine that an image is being projected on a screen and a wall of a room, with which it can determine that a plurality of users does not exist around the projection screen 10 and is not performing an operation of inputting images on the projection screen 10.

If the platform face projection is performed by the image projection apparatus 100 (S310: YES), the screen rotation determination unit 123 determines whether a new user exists at a direction not detected yet is operating the pointing device 200 (S303) similar to step 203 in the first example embodiment (FIG. 7). By contrast, if the platform face projection is not performed by the image projection apparatus 100 (S310: NO), the screen rotation determination unit 123 determines that the projection screen 10 does not require the rotation, and the sequence ends.

The screen rotation determination unit 123 determines whether the image projection apparatus 100 is set at a position that can perform the platform face projection (e.g., desk face projection). Specifically, the screen rotation determination unit 123 determines whether the image projection apparatus 100 is set at the position that can perform the platform face projection based on an installation angle or posture of the image projection apparatus 100 detectable by the accelerometer 170.

As to the image projection apparatus 100 of the second example embodiment, the screen rotation determination unit 123 determines that the projection screen 10 does not require the rotation when the projection screen 10 is not projected on the face of the platform (e.g., table, desk, and stand). With employing this configuration, the following effect can be achieved. Since the screen rotation determination unit 123 can automatically determine whether the projection screen 10 is to be rotated depending on the installation condition of the image projection apparatus 100 having the interactive operation capability, user operability can be enhanced.

### (Third example embodiment)

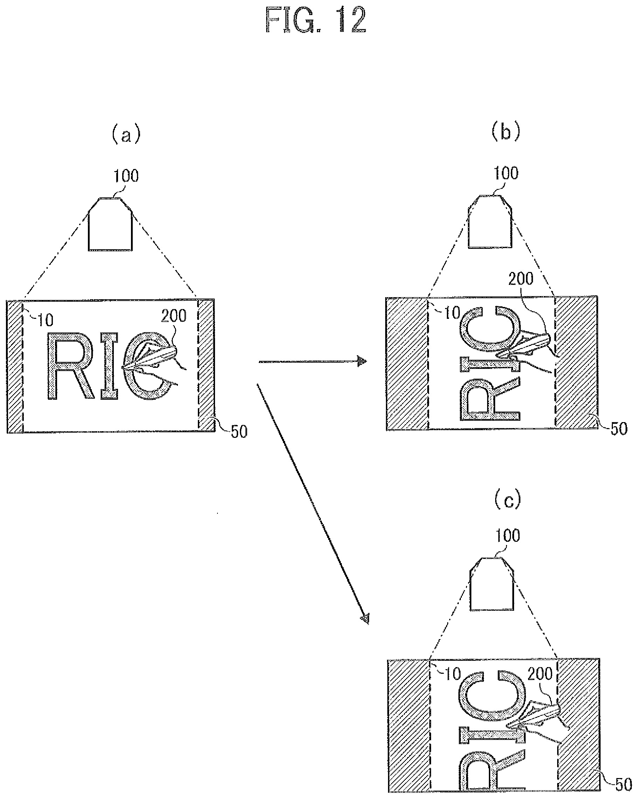

A description is given of the image projection apparatus 100 that can rotate the projection screen 10 as a third example embodiment with reference to drawing. A description is given of a process of rotating the projection screen 10 with reference to FIG. 12. Different from the first and second example embodiments, the third example embodiment adds a configuration to set the rotation center of the projection screen 10 when rotating the projection screen 10. Therefore, the third example embodiment is described by omitting the same or similar configurations and associated effects described in the first and second example embodiments. FIG. 12 illustrates two cases when the projection screen 10 is rotated about the rotation center.

In the above described first and second example embodiments, when the projection screen 10 is to be rotated, the image processor 124 performs the size-change processing to an image signal to convert the image signal to a projection signal so that the entire of rotated projection screen 10 can be projected or displayed within the projection area on the platform (e.g., table, desk, stand). However, the size of the projection screen 10 may be reduced in some cases. For example, in a case of using a rectangular desk having an aspect ratio other than one to one (1:1) as the platform 50 and projecting the projection screen 10 on the entire area on the rectangular desk with the same aspect ratio other than one to one (1:1), the size of the projection screen 10 is reduced when the projection screen 10 is rotated about the center of the projection image for 90 degrees to the left or right so that the entire of the projection screen 10 can be projected on the desk. When the size of the projection screen 10 becomes too small, users may feel difficulty of writing an image. By contrast, if the projection screen 10 is rotated about the center of the projection image for 90 degrees without changing the size of the projection image, a part of the projection image may not be projected on the rectangular desk, and thereby the users may feel difficulty of inputting information on a desired portion of the projection image.

FIG. 12 illustrates cases that a part of a projection image on the rotated projection screen 10 is not projected on the rectangular platform such as desk. As illustrated in FIG. 12(a), the platform 50 having a rectangular shape having the aspect ratio other than one to one (1:1) is used while the long side of the rectangular platform 50 is set parallel to the horizontal direction in FIG. 12, and the short side of the projected projection screen 10 is set equal to the short side of the platform 50, and the long side of projected projection screen 10 is set greater than the short side of the platform 50 and smaller than the long side of the rectangular platform 50. If this projection screen 10 is processed with the size-change processing similar to the first and second example embodiments, and rotated in the counter-clockwise direction for 90 degrees, and then projected on the rectangular platform 50, as illustrated in FIG. 12(b), the size of the projection screen 10 projected on the rectangular platform 50 is reduced, in which the long side of projected projection screen 10 is set equal to the short side of the platform 50. By contrast, if this projection screen 10 is rotated in the counter-clockwise direction for 90 degrees and projected on the rectangular platform 50 without performing the size-change processing, the projection screen 10 is projected on the rectangular platform 50 while the both ends of the long side of the projected projection screen 10 are out of the short side of the platform 50 as illustrated in FIG. 12(c).

In view of this issue, as to the image projection apparatus 100 of the third example embodiment, coordinates of a point input by the electronic pointing device 200 can be set as the rotation center for rotating the projection screen 10, in which the image processor 124 performs the rotation processing to an image signal to convert the image signal to a projection signal, in which the screen rotation point determination unit 128 can be used to determine the rotation center. With employing this configuration, although a part of the rotated projection screen 10 is out of the platform 50 as illustrated in FIG. 12(c), the size of the projection screen 10 is not reduced, with which users may not feel difficulty of writing images. Further, since an image portion that a user wants to perform writing can be set as the center for rotating the projection screen 10 by using the screen rotation point determination unit 128, the to-be-input image portion can be enlarged and projected, and thereby the interactive operation capability of the system can be enhanced.

### (Fourth example embodiment)

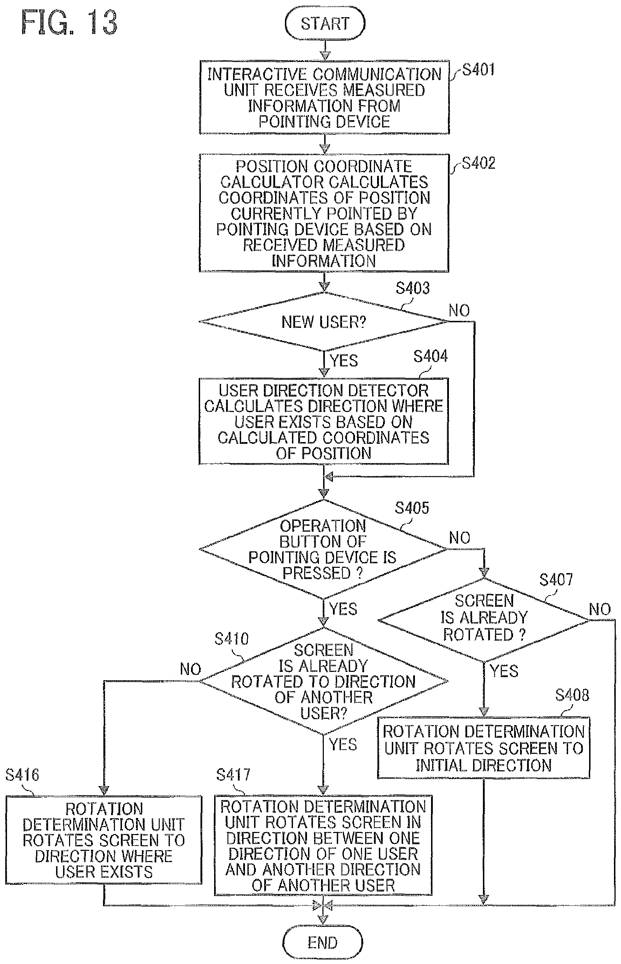

A description is given of the image projection apparatus 100 that can rotate the projection screen 10 as a fourth example embodiment with reference to drawing. A description is given of a process of rotating the projection screen 10 with reference to FIG. 13. Different from the first to third example embodiments, the fourth example embodiment can selectively set a rotation angle of the projection screen 10 when to rotate the projection screen 10. Therefore, the fourth example embodiment is described by omitting the same or similar configurations and associated effects described in the first to third example embodiments. The feature of the fourth example embodiment can be applied to any of the first to third example embodiments. A description is given of one case applying the feature of the fourth example embodiment to the first example embodiment.

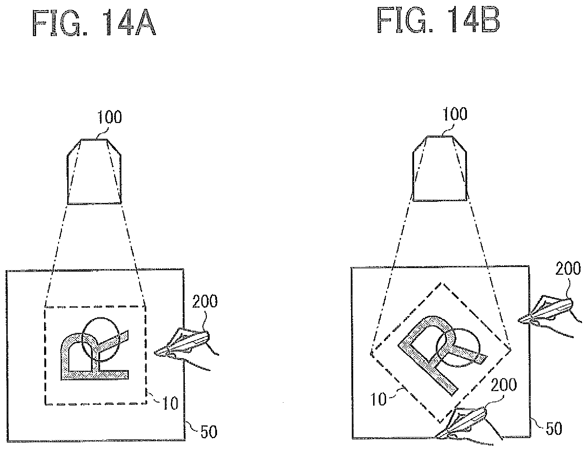

FIG. 13 is a flow chart showing the steps of a process of rotating the projection screen 10 of the fourth example embodiment. FIG. 14 illustrates a rotation of the projection screen 10 when two users use the pointing device 200. FIG. 14A illustrates a position of the projection screen 10 when one user performs an image inputting operation at first, and FIG. 14B illustrates a position of the projection screen 10 when another user performs another image inputting operation later.

The processing by the image projection apparatus 100 of the fourth example embodiment adds a step of determining whether the projection screen 10 is already rotated to a direction of another user right after the step of determining that the operation button of the pointing device 200 is pressed (S205: YES in FIG. 7, S305: YES in FIG. 11). Specifically, as shown in FIG. 13, step S410 of determining whether the projection screen 10 is already rotated to a direction of another user is added right after the step of determining that the operation button of the pointing device 200 is pressed (S405: YES). Steps S401 to 408 of FIG. 11 are matched to steps S201 to S208 of FIG. 7.

If it is determined that the projection screen 10 is not yet rotated (S410: NO), similar to the first and second example embodiments, the image processor 124 performs the rotation processing to an image signal to rotate the projection screen 10, and converts the image signal to a projection signal, and then the projection screen 10 is rotated to a user direction (S416). By contrast, if it is determined that the projection screen 10 is already rotated (S410: YES), the image processor 124 performs the rotation processing to an image signal to rotate the projection screen 10 to an in-between direction of the two users and converts the image signal to a projection signal, and then the projection screen 10 is rotated to the in-between direction of the two users (S417).

For example, FIG. 14 illustrates an example case that the projection screen 10 is rotated to the in-between direction of the two users, in which a user at the right side of the platform 50 performs an image inputting operation at first, and another user at the front side of the platform 50 performs an image inputting operation later. In this case, as illustrated in FIG. 14A, the projection screen 10 is rotated to the right direction to set the bottom side of an projection image to the right side of the platform 50 when the right-side user performs the image inputting operation, and then the projection screen 10 is rotated to an in-between direction of the two users when the front-side user performs an image inputting operation as illustrated in FIG. 14B, in which the bottom side of the image and the front side of the platform 50 are angled with 45 degrees with each other as illustrated in FIG. 14B. By rotating the projection screen 10 to the in-between direction of the two users, the image position can be set a position that is easy to write and see by both of the two users.

As to the above described image projection apparatus 100 of the fourth example embodiment, when the two users at different directions use the pointing device 200, the screen rotation determination unit 123 rotates the projection screen 10 to the in-between direction of the two users. With this rotation processing, when the two users at the different directions use the pointing device 200, the projection screen 10 can be rotated to the in-between direction of the two users, with which the image position can be set to a position that is easy to write and see by both of the two user, and thereby operability and/or usability can be enhanced. The in-between direction of the two users can be set any directions between one user direction and adjacent user direction.

In the above described example embodiments, the image projection apparatus 100 is devised as a portable apparatus that can project an image on a screen and a wall of a room, and the image projection apparatus 100, the pointing device 200, and the information processing apparatus 300 are employed to configure the image projection system 1, but the present invention is not limited to such configuration. For example, instead of the pointing device 200, the coordinate input device can employ a pointing rod and a pointer. Further, in the above described example embodiments, the image projection system 1 employs the pointing device 200 that can measure a pattern information embedded in a projection image projected on the projection screen 10, and input coordinates of a point on the projection screen 10, but the present invention is not limited to such configuration. For example, a coordinate input device that can input coordinates of a point on the projection screen 10 using other methods can be employed for the image projection system 1. The present invention can be applied to various image projection apparatuses, image projection systems, and interactive input-output systems within the scope of the present invention.

The above described example embodiments can be configured, for example, as below.

### (Configuration A)

The above described image projection apparatus 100 can be configured with the coordinate input device such as the pointing device 200, and each has the interactive input-output capability or interactive input capability. The image projection apparatus 100 includes the image receiver 121 to receive an image signal; the image processor 124 to convert the image signal received by the image receiver 121 to a projection signal; the projection unit 122 to project a projection image on the projection screen 10 using the projection signal converted by the image processor 124; the coordinate calculator 125 to calculate coordinates of a point in the projection image on the projection screen 10 when the point is identified by the coordinate input device 200 and information of coordinates of the identified point is input from the coordinate input device 200 to the image projection apparatus 100; the interactive communication unit 129 to perform communication of information related to the interactive input-output capability with the coordinate input device, and the external apparatus 300 that outputs the image signal to the image receiver121; the user direction detector 126 to detect a user direction where a user that performs an operation of inputting the coordinates of the point by using the coordinate input device 200 exists based on the coordinates of the point input by the coordinate input device 200 and information of coordinates defining an area of the projection screen 10; and the screen rotation determination unit 123 to determine whether the user is performing the operation of inputting the coordinates of the point, and to determine whether the projection screen 10 is to be rotated by using the image processor 124 based on the user direction detected by the user direction detector 126.

With employing this configuration, as above described in the one or more example embodiments, the following effect can be achieved. When a user starts an operation of inputting an image on the projection screen 10 projected on a top face of the platform 50, the user moves the pointing device 200 from a position close to a body of the user toward a peripheral area on the projection screen 10. Therefore, the pointing device 200 crosses any one of the peripheral areas of the projection screen 10. When the pointing device 200 crosses a specific peripheral area, coordinates of a point input by the pointing device 200 exists in the specific peripheral area of the projection screen 10 where the user exists. Therefore, by detecting specific coordinates in the specific peripheral area of the projection screen 10 corresponding to the coordinates of the point input by the pointing device 200 when the user starts the operation of inputting the image by using the pointing device 200, the user direction detector 126 can detect the direction of the user that performs the image inputting operation.

When the screen rotation determination unit 123 determines that the user is performing the image inputting operation, and determines to rotate the projection screen 10 based on the detected user direction, the projection screen 10 can be rotated to a front direction of the user performing the image inputting operation, and projected by the projection unit 122. With this rotation processing, the user can easily perform the image inputting operation. Further, when the image inputting operation is completed and the user is not performing the image inputting operation, the screen rotation determination unit 123 determines that a rotation of the projection screen 10 based on the detected user direction is not required, and then the projection screen 10 can be returned to the original position that is easy to see from the plurality of users. Therefore, when the plurality of users writes images on the projection screen 10 projected on the platform 50 by turns or in turn from different directions by using the pointing device 200, the image projection apparatus 100 can project the image in a direction that is easy to write and easy to see by the plurality of users.

### (Configuration B)

As to configuration A, the screen rotation determination unit 123 determines that the projection screen 10 is not rotated when the projection screen 10 is not projected on a platform 50. With employing this configuration, as above described in the second example embodiment, the following effect can be achieved. Since the screen rotation determination unit 123 can automatically determine whether the projection screen 10 is to be rotated depending on the installation condition of the image projection apparatus 100 having the interactive operation capability, user operability can be enhanced.

### (Configuration C)

As to configurations A or B, the image projection apparatus 100 further includes the screen rotation point determination unit 128 to set the coordinates of the point on the projection screen 10 input by the coordinate input device 200 as the center for rotating the projection screen 10.

With employing this configuration, as above described in the example embodiments, the following effect can be achieved. For example, in a case of using a rectangular desk having an aspect ratio other than one to one (1:1) as the platform 50 and projecting the projection screen 10 on the entire area on the rectangular desk with the same aspect ratio other than one to one (1:1), the size of the projection screen 10 is reduced when the projection screen 10 is rotated about the center of the projection image for 90 degrees to the left or right so that the entire of the projection screen 10 can be projected on the desk. When the size of the projection screen 10 becomes too small, users may feel difficulty of writing an image. By contrast, if the projection screen 10 is rotated about the center of the projection image for 90 degrees without changing the size of the projection image, a part of the projection image may not be projected on the rectangular desk, and thereby the users may feel difficulty of inputting information on a desired portion of the projection image. By setting an image portion that a user wants to perform writing as the rotation center of rotating the projection screen 10 by using the screen rotation point determination unit 128, the to-be-input image portion can be enlarged and projected, with which the interactive operation capability or interactive input-output capability can be enhanced.

### (Configuration D)

As to any one of configurations A to C, when two users at different directions use the coordinate input device 200, the screen rotation determination unit 123 rotates the projection screen 10 to the in-between direction of the two users. With employing this configuration, as above described in the example embodiments, the following effect can be achieved. When the two users at different directions use the pointing device 200, the screen rotation determination unit 123 rotates the projection screen 10 to the in-between direction of the two users. With this rotation processing, when the two users at the different directions use the pointing device 200, the projection screen 10 can be rotated to the in-between direction of the two users, with which the image position can be set at a position that is easy to write and see by both of the two users, and thereby operability and/or usability can be enhanced.

### (Configuration E)

The above described system employing the interactive input-output capability includes the image projection apparatus 100 of any one of configurations A to D to project an projection image on the projection screen 10; the coordinate input device such as the pointing device 200 to input coordinates of a point in the projection image on the projection screen 10 projected by the image projection apparatus 100; and the external apparatus such as the information processing apparatus 300 to output an image signal used for generating the projection image projected by the image projection apparatus 100. The image projection apparatus 100 includes the interactive input-output capability to operate the external apparatus based on the coordinates of the point pointed by the coordinate input device contacting the projection screen or pointed by the coordinate input device not contacting the projection screen.

With employing this configuration, as above described in the example embodiments, the following effect can be achieved. For example, the interactive-communication-based input system having the same or similar effect of the image projection apparatus of any one of configurations A to D can be devised.

As to the above described image projection apparatus and image projection system, a plurality of users can easily write images on the projection screen projected on the platform (e.g., table, desk, stand) from different directions of the projection screen by using the coordinate input device by turns or in turn, and the images can be drawn with orientations easy to write and see by the plurality of users.

The present invention can be implemented in any convenient form, for example using dedicated hardware platform, or a mixture of dedicated hardware platform and software. Each of the functions of the described embodiments may be implemented by one or more processing circuits or circuitry. Processing circuitry includes a programmed processor, as a processor includes circuitry. A processing circuit also includes devices such as an application specific integrated circuit (ASIC) and conventional circuit components arranged to perform the recited functions. For example, in some embodiments, any one of the information processing apparatus may include a plurality of computing devices, e.g., a server cluster, that are configured to communicate with each other over any type of communication links, including a network, a shared memory, etc. to collectively perform the processes disclosed herein.

The computer software can be provided to the programmable device using any carrier medium or storage medium such as non-volatile memory for storing processor-readable code such as a floppy disk, a flexible disk, a compact disk read only memory (CD-ROM), a compact disk rewritable (CD-RW), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a hard disk in a server, a flash memory, Blu=ray disc (registered trademark), secure digital (SD) card, a solid state memory device or the like, but not limited these. Further, the computer software can be provided through communication lines such as electrical communication line. Further, the computer software can be provided in a read only memory (ROM) disposed for the computer. The computer software stored in the storage medium can be installed to the computer and executed to implement the above described processing. The computer software stored in the storage medium of an external apparatus can be downloaded and installed to the computer via a network to implement the above described processing.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C, C++, C#, Java (registered trademark), JavaScript (registered trademark), Perl, Ruby, or legacy programming languages such as machine language, assembler language to control functional units used for the apparatus or system. For example, a particular computer (e.g., personal computer, workstation) may control an information processing apparatus or an image processing apparatus such as image forming apparatus using a computer-readable program, which can execute the above-described processes or steps. In the above-described embodiments, at least one or more of the units of apparatus can be implemented as hardware or as a combination of hardware/software combination. Each of the functions of the described embodiments may be implemented by one or more processing circuits. A processing circuit includes a programmed processor, as a processor includes circuitry. A processing circuit also includes devices such as an application specific integrated circuit (ASIC) and conventional circuit components arranged to perform the recited functions.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. An image projection apparatus (100) configured to be used with a coordinate input device (200), the image projection apparatus and the coordinate input device each having interactive input-output capability, the image projection apparatus (100) comprising:
an image receiver (121) configured to receive an image signal;
an image processor (124) configured to convert the image signal received by the image receiver (121) to a projection signal;
a projection unit (122) configured to project a projection image on a projection screen (10) using the projection signal converted by the image processor (124);
a coordinate calculator (125) configured to calculate coordinates of a point in the projection image on the projection screen (10) when the point is identified by the coordinate input device (200) and information of coordinates of the identified point is input from the coordinate input device (200) to the image projection apparatus (100);
an interactive communication unit (129) configured to perform communication of information related to the interactive input-output capability with the coordinate input device (200) and
an external apparatus (300) that outputs the image signal to the image receiver (121), the interactive communication unit being further configured to receive measured information from the coordinate input device;
a user direction detector (126) configured to detect a user direction where a user that performs an operation of inputting the coordinates of the point by using the coordinate input device (200) exists based on the coordinates of the point input by the coordinate input device (200) and information of coordinates defining an area of the projection screen (10); and
a screen rotation determination unit (123) configured to determine whether the user is performing the operation of inputting the coordinates of the point, and to determine whether the projection image is to be rotated by using the image processor (124) based on the user direction detected by the user direction detector (126), **wherein** when the interactive communication unit (129) receives the measured information from the coordinate input device (200), the coordinate calculator (125) is configured to calculate coordinates of a point or position on the projection screen
(10) input using the coordinate input device based on the measured information, then the screen rotation determination unit (123) is configured to determine whether a new user is operating the coordinate input device (200) by determining whether the user exists at a
direction not detected yet, then the screen rotation determination unit (123) is configured to determine whether an operation button of
the coordinate input device (200) is pressed, and when the operation button is pressed, the screen rotation determination unit (123) is configured to determine that the user is to draw an image using the coordinate input device (200) and is configured to
determine to rotate the projection image to the user direction, wherein when the screen rotation determination unit (123) has determined that a new user is operating the coordinate input device, it is configured to identify the user direction by determining a peripheral area (10p) of the projection screen (10) corresponding to the point input using the coordinate input device by means of the user direction detector (126).

2. The image projection apparatus (100) of claim 1, wherein before the screen rotation determination unit (123) determines, whether a new user is operating the coordinate input device (200), the image projection apparatus (100) is configured to determine whether an
image is projected on a platform.

3. The image projection apparatus (100) of claim, wherein the screen rotation determination unit (123) is configured to determine that the projection image is not rotated when the projection image is not projected on a platform (50).

4. The image projection apparatus (100) of claim 1 or claim 3, further comprising a screen rotation point determination unit (128)
configured to set the coordinates of the point on the projection screen (10) input by the coordinate input device (200) as
the center for rotating the projection image.

5. A system employing an interactive input-output capability (100, 200, 300) comprising:
the image projection apparatus (100) of any one of claims 1 to 4 to project an projection image on a projection screen (10);
a coordinate input device (200) to input coordinates of a point in the projection image on the projection screen (10) projected by the image projection apparatus (100); and
an external apparatus (300) to output an image signal used for generating the projection image projected by the image projection apparatus (100),
the image projection apparatus (100) including an interactive input-output capability to operate the external apparatus (300) based on the coordinates of the point pointed by the coordinate input device (200) contacting the projection screen (10) or pointed by the coordinate input device (200) not contacting the projection screen (10).

## Patentansprüche

1. Bildprojektionsvorrichtung (100), die konfiguriert ist, um mit
einer Koordinateneingabevorrichtung (200) verwendet zu werden, wobei sowohl die Bildprojektionsvorrichtung als auch die Koordinateneingabevorrichtung je eine interaktive Eingabe-Ausgabe-Fähigkeit aufweisen, wobei die Bildprojektionsvorrichtung (100) Folgendes umfasst:
einen Bildempfänger (121), der konfiguriert ist, um ein Bildsignal zu empfangen;
einen Bildprozessor (124), der konfiguriert ist, um das Bildsignal, das von dem Bildempfänger (121) empfangen wird, in ein Projektionssignal umzuwandeln;
eine Projektionseinheit (122), die konfiguriert ist, um ein Projektionsbild auf einem Projektionsbildschirm (10) unter Verwendung des Projektionssignals, das von dem Bildprozessor (124) umgewandelt wird, zu projizieren;
einen Koordinatenberechner (125), der konfiguriert ist, um Koordinaten eines Punkts in dem Projektionsbild auf dem Projektionsbildschirm (10) zu berechnen, wenn der Punkt von der Koordinateneingabevorrichtung (200) identifiziert ist und Informationen von Koordinaten des identifizierten Punkts von der Koordinateneingabevorrichtung (200) in die Bildprojektionsvorrichtung (100) eingegeben werden;
eine interaktive Kommunikationseinheit (129), die konfiguriert ist, um Kommunikation von Informationen, die die interaktive Eingabe-Ausgabe-Fähigkeit betreffen, mit der Koordinateneingabevorrichtung (200) und einer externen Vorrichtung (300), die das Bildsignal an den Bildempfänger (121) ausgibt, auszuführen, wobei die interaktive Kommunikationseinheit ferner konfiguriert ist, um Messinformationen von der Koordinateneingabevorrichtung zu empfangen;
einen Benutzerrichtungsdetektor (126), der konfiguriert ist, um eine Benutzerrichtung, in der ein Benutzer, der einen Vorgang des Eingebens der Koordinaten des Punkts durch Verwenden der Koordinateneingabevorrichtung (200) ausführt, vorhanden ist, basierend auf den Koordinaten des Punkts, die von der Koordinateneingabevorrichtung (200) eingegeben werden, und Informationen von Koordinaten, die einen Bereich des Projektionsbildschirms (10) definieren, zu erfassen; und
eine Bildschirmdrehungsbestimmungseinheit (123), die konfiguriert ist, um zu bestimmen, ob der Benutzer den Vorgang des Eingebens der Koordinaten des Punkts ausführt, und um zu bestimmen, ob das Projektionsbild durch Verwenden des Bildprozessors (124) basierend auf der Benutzerrichtung, die von dem Benutzerrichtungsdetektor (126) erfasst wird, gedreht werden soll,
wobei,
wenn die interaktive Kommunikationseinheit (129) die Messinformationen von der Koordinateneingabevorrichtung (200) empfängt, der Koordinatenberechner (125) konfiguriert ist, um Koordinaten eines Punkts oder einer Position auf dem Projektionsbildschirm (10), die unter Verwendung der Koordinateneingabevorrichtung eingegeben werden, basierend auf den Messinformationen zu berechnen, dann die Bildschirmdrehungsbestimmungseinheit (123) konfiguriert ist, um zu bestimmen, ob ein neuer Benutzer die Koordinateneingabevorrichtung (200) betätigt, durch Bestimmen, ob der Benutzer in einer Richtung, die noch nicht erfasst wurde, vorhanden ist, dann die Bildschirmdrehungsbestimmungseinheit (123) konfiguriert ist, um zu bestimmen, ob ein Betätigungsknopf der Koordinateneingabevorrichtung (200) gedrückt ist,
und wenn der Betätigungsknopf gedrückt ist, die Bildschirmdrehungsbestimmungseinheit (123) konfiguriert ist, um zu bestimmen, dass der Benutzer ein Bild unter Verwendung der Koordinateneingabevorrichtung (200) zeichnen soll und konfiguriert ist, um zu bestimmen, dass das Projektionsbild in die Benutzerrichtung gedreht wird,
wobei, wenn die Bildschirmdrehungsbestimmungseinheit (123) bestimmt hat, dass ein neuer Benutzer die Koordinateneingabevorrichtung betätigt, sie konfiguriert ist, um die Benutzerrichtung durch Bestimmen eines Randbereichs (10p) des Projektionsbildschirms (10), der dem Punkt entspricht, der unter Verwendung der Koordinateneingabevorrichtung eingegeben wird, mittels des Benutzerrichtungsdetektors (126) zu identifizieren.

2. Bildprojektionsvorrichtung (100) nach Anspruch 1, wobei, bevor die Bildschirmdrehungsbestimmungseinheit (123) bestimmt, ob ein neuer Benutzer die Koordinateneingabevorrichtung (200) betätigt, die Bildprojektionsvorrichtung (100) konfiguriert ist, um zu bestimmen, ob ein Bild auf eine Plattform projiziert wird.

3. Bildprojektionsvorrichtung (100) nach Anspruch 2, wobei die Bildschirmdrehungsbestimmungseinheit (123) konfiguriert ist, um zu bestimmen, dass das Projektionsbild nicht gedreht wird, wenn das Projektionsbild nicht auf eine Plattform (50) projiziert ist.

4. Bildprojektionsvorrichtung (100) nach Anspruch 1 oder Anspruch 3, ferner umfassend eine Bildschirmdrehpunktbestimmungseinheit (128), die konfiguriert ist, um die Koordinaten des Punkts auf dem Projektionsbildschirm (10), die von der Koordinateneingabevorrichtung (200) eingegeben werden, als den Mittelpunkt beim Drehen des Projektionsbilds festzulegen.

5. System, das eine interaktive Eingabe-Ausgabe-Fähigkeit (100, 200, 300) einsetzt, umfassend:
die Bildprojektionsvorrichtung (100) nach einem der Ansprüche 1 bis 4, um ein Projektionsbild auf einen Projektionsbildschirm (10) zu projizieren;
eine Koordinateneingabevorrichtung (200), um Koordinaten eines Punkts in dem Projektionsbild auf dem Projektionsbildschirm (10), das von der Bildprojektionsvorrichtung (100) projiziert wird, einzugeben; und
eine externe Vorrichtung (300), um ein Bildsignal auszugeben, das zum Erzeugen des Projektionsbilds, das von der Bildprojektionsvorrichtung (100) projiziert wird, verwendet wird,
die Bildprojektionsvorrichtung (100), die eine interaktive Eingabe-Ausgabe-Fähigkeit enthält, um die externe Vorrichtung (300) basierend auf den Koordinaten des Punkts zu betätigen, der von der Koordinateneingabevorrichtung (200), die den Projektionsbildschirm (10) kontaktiert, gezeigt wird oder von der Koordinateneingabevorrichtung (200), die den Projektionsbildschirm (10) nicht kontaktiert, gezeigt wird.

## Revendications

1. Appareil de projection d'image (100) conçu pour être utilisé avec
un dispositif d'entrée de coordonnées (200), l'appareil de projection d'image et le dispositif d'entrée de coordonnées présentant chacun une capacité d'entrée-sortie interactive, l'appareil de projection d'image (100) comprenant :
un récepteur d'image (121) conçu pour recevoir un signal d'image ;
un processeur d'image (124) conçu pour convertir le signal d'image reçu par le récepteur d'image (121) en signal de projection ;
une unité de projection (122) conçue pour projeter une image de projection sur un écran de projection (10) à l'aide du signal de projection converti par le processeur d'image (124) ;
un calculateur de coordonnées (125) conçu pour calculer des coordonnées d'un point dans l'image de projection sur l'écran de projection (10) lorsque le point est identifié par le dispositif d'entrée de coordonnées (200) et des informations de coordonnées du point identifié sont entrées depuis le dispositif d'entrée de coordonnées (200) vers l'appareil de projection d'image (100) ;
une unité de communication interactive (129) conçue pour effectuer une communication d'informations associées à la capacité d'entrée-sortie interactive avec le dispositif d'entrée de coordonnées (200) et un appareil externe (300) qui émet le signal d'image vers le récepteur d'image (121), l'unité de communication interactive étant en outre conçue pour recevoir des informations mesurées depuis le dispositif d'entrée de coordonnées
un détecteur de direction d'utilisateur (126) conçu pour détecter une direction d'utilisateur où un utilisateur qui effectue une opération d'entrée des coordonnées du point à l'aide du dispositif d'entrée de coordonnées (200) existe en fonction des coordonnées du point entrées par le dispositif d'entrée de coordonnées (200) et des informations de coordonnées définissant une zone de l'écran de projection (10) ; et
une unité de détermination de rotation d'écran (123) conçue pour déterminer si l'utilisateur effectue l'opération d'entrée des coordonnées du point, et pour déterminer si l'image de projection doit être tournée à l'aide du processeur d'image (124) en fonction de la direction d'utilisateur détectée par le détecteur de direction d'utilisateur (126).
lorsque l'unité de communication interactive (129) reçoit les informations mesurées depuis le dispositif d'entrée de coordonnées (200), le calculateur de coordonnées (125) étant conçu pour calculer des coordonnées d'un point ou d'une position sur l'écran de projection (10) entrées à l'aide du dispositif d'entrée de coordonnées en fonction des informations mesurées, puis l'unité de détermination de rotation d'écran (123) étant conçue pour déterminer si un nouvel utilisateur actionne le dispositif d'entrée de coordonnées (200) par la détermination de savoir si l'utilisateur existe au niveau d'une direction pas encore détectée, puis l'unité de détermination de rotation d'écran (123) étant conçue pour déterminer si on a appuyé sur un bouton d'actionnement du dispositif d'entrée de coordonnées (200),
et lorsqu'on a appuyé sur le bouton d'actionnement, l'unité de détermination de rotation d'écran (123) étant conçue pour déterminer que l'utilisateur doit dessiner une image à l'aide du dispositif d'entrée de coordonnées (200) et étant conçue pour déterminer s'il faut faire tourner l'image de projection vers la direction d'utilisateur,
lorsque l'unité de détermination de rotation d'écran (123) a déterminé qu'un nouvel utilisateur actionne le dispositif d'entrée de coordonnées, elle étant conçue pour identifier la direction d'utilisateur par la détermination d'une zone périphérique (10p) de l'écran de projection (10) correspondant au point entré à l'aide du dispositif d'entrée de coordonnées au moyen du détecteur de direction d'utilisateur (126).

2. Appareil de projection d'image (100) selon la revendication 1, dans lequel avant que l'unité de détermination de rotation d'écran (123) ne détermine si un nouvel utilisateur actionne le dispositif d'entrée de coordonnées (200), l'appareil de projection d'image (100) est conçu pour déterminer si une image est projetée sur une plate-forme.

3. Appareil de projection d'image (100) selon la revendication 2, dans lequel l'unité de détermination de rotation d'écran (123) est conçue pour déterminer que l'image de projection n'est pas tournée lorsque l'image de projection n'est pas projetée sur une plate-forme (50).

4. Appareil de projection d'image (100) selon la revendication 1 ou la revendication 3, comprenant en outre une unité de détermination de point de rotation d'écran (128) conçue pour définir les coordonnées du point sur l'écran de projection (10) entrées par le dispositif d'entrée de coordonnées (200) comme centre permettant de faire tourner l'image de projection.

5. Système utilisant une capacité d'entrée-sortie interactive (100, 200, 300) comprenant :
l'appareil de projection d'image (100) selon l'une quelconque des revendications 1 à 4 pour projeter une image de projection sur un écran de projection (10) ;
un dispositif d'entrée de coordonnées (200) pour entrer des coordonnées d'un point dans l'image de projection sur l'écran de projection (10) projetée par l'appareil de projection d'image (100) ; et
un appareil externe (300) pour émettre un signal d'image utilisé pour générer l'image de projection projetée par l'appareil de projection d'image (100),
l'appareil de projection d'image (100) comprenant une capacité d'entrée-sortie interactive pour actionner l'appareil externe (300) en fonction des coordonnées du point indiquées par le dispositif d'entrée de coordonnées (200) en contact avec l'écran de projection (10) ou indiquées par le dispositif d'entrée de coordonnées (200) n'étant pas en contact avec l'écran de projection (10).
